# EUROPEAN PATENT APPLICATION

(11) **EP 4 513 937 A1**
(43) Date of publication of application: **26.02.2025**
(21) Application number: 22938528.1
(22) Date of filing: 21.04.2022
(51) Int. Cl.: H04W 16/28, H04W 36/00, H04W 72/20

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/018459
(87) International publication number: WO 2023/203728

(57) **Abstract**

A terminal according to an aspect of the present disclosure includes a receiving section that receives a higher layer parameter indicating information of a tracking channel state information reference signal (CSI-RS) (TRS), and a control section that expects that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell. According to an aspect of the present disclosure, an indication of at least one of the TCI state and the QCL type in the case where a non-serving cell is applied is appropriately made.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, communication is assumed to be controlled based on mobility between a plurality of cells (inter-cell mobility) including a cell (non-serving cell) having a physical cell ID (PCI) different from a PCI of a serving cell, or inter-cell mobility using a plurality of transmission/reception points (for example, multi-TRP (MTRP).

However, an indication of at least one of a TCI state and a QCL type in a case where a non-serving cell is applied has not been clarified.

The present disclosure has been made in light of the foregoing, and has an object to provide a terminal, a radio communication method, and a base station capable of appropriately performing indication of at least one of the TCI state and the QCL type in the case where the non-serving cell is applied.

### Solution to Problem

A terminal according to an aspect of the present disclosure includes a receiving section that receives a higher layer parameter indicating information of a tracking channel state information reference signal (CSI-RS) (TRS), and a control section that expects that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell.

### Advantageous Effects of Invention

According to an aspect of the present disclosure, an indication of at least one of the TCI state and the QCL type in the case where a non-serving cell is applied is appropriately made.

### Brief Description of Drawings

[FIG. 1] FIGS. 1A and 1B are diagrams to show an example of inter-cell mobility.
[FIG. 2] FIG. 2 is a diagram to show a TCI state corresponding to a CSI-RS associated with an SSB of a non-serving cell.
[FIG. 3] FIG. 3 is a diagram to show an example of association between beam reporting and rebuild indices.
[FIG. 4] FIG. 4 is a diagram to show an example of an inter-cell scenario at a multi-DCI based multi-TRP.
[FIG. 5] FIG. 5A is a diagram to show the maximum number of additional PCIs in a case 1. FIG. 5B is a diagram to show the maximum number of additional PCIs in a case 2.
[FIG. 6] FIG. 6 is a diagram to show an example in which an SSB from a serving cell and an SSB from a cell having an additional PCI overlap a UL transmission.
[FIG. 7] FIG. 7A is a diagram to show Rel-15 TCI state and Rel-17 configured DL/joint TCI state. FIG. 7B is a diagram to show an indicated DL/joint TCI state.
[FIG. 8] FIG. 8 is a diagram to show a QCL relation of TRSs in aspect 1.1.
[FIG. 9] FIG. 9 is a diagram to show a QCL relation of CSI-RSs in aspect 1.2.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (TCI, Spatial Relation, QCL)

For NR, a study is underway to control reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE on the basis of a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameters (or parameter set) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

An assumption by the UE that a control resource set (CORESET), channel, or reference signal has a specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a tracking CSI-RS (also referred to as a Tracking Reference Signal (TRS)), a reference signal for QCL detection (also referred to as a QRS), a demodulation reference signal (DMRS), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### (CSI)

In NR, the UE measures a channel state by using a reference signal (or for a resource for the reference signal) to feed back (report) channel state information (CSI) to a network (for example, base station).

The UE may measure the channel state by using at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

A CSI-RS resource may include at least one of a non-zero power (NZP) CSI-RS resource, a zero power (ZP) CSI-RS resource, and a CSI interference measurement (CSI-IM) resource.

A resource for measuring a signal component for the CSI may be referred to as a signal measurement resource (SMR) or a channel measurement resource (CMR). The SMR (CMR) may include, for example, the NZP CSI-RS resource, SSB, and the like for channel measurement.

A resource for measuring an interference component for the CSI may be referred to as an interference measurement resource (IMR). The IMR may include, for example, at least one of the NZP CSI-RS resource, SSB, ZP CSI-RS resource, and CSI-IM resource for interference measurement.

The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The CSI may have a plurality of parts. A CSI part 1 may include information with a relatively small number of bits (for example, the RI). A CSI part 2 may include information with a relatively large number of bits (for example, CQI) such as information defined based on the CSI part 1.

The CSI may be classified into some CSI types. According to the CSI type, the reported information types, sizes, and the like may be different. For example, there may be defined a CSI type configured to perform communication using a single-beam (also referred to as type 1 (type I) CSI, CSI for single-beam, or the like), and a CSI type configured to perform communication using a multi-beam (also referred to as type 2 (type II) CSI, CSI for multi-beam, or the like). The use application of the CSI type is not limited to the above.

As a method of CSI feedback, a periodic CSI (P-CSI) report, an aperiodic CSI (A-CSI, AP-CSI) report, a semi-persistent CSI (SP-CSI) report, and the like are under study.

To the UE, CSI measurement configuration information may be notified through higher layer signaling or physical layer signaling, or a combination of these.

The CSI measurement configuration information may be configured using, for example, an RRC information element "CSI-MeasConfig". The CSI measurement configuration information may include CSI resource configuration information (RRC information element "CSI-ResourceConfig"), CSI report configuration information (RRC information element "CSI-ReportConfig"), and the like. The CSI resource control information pertains to a resource for the CSI measurement, and the CSI report control information pertains to how the UE perform the CSI report.

RRC information elements (or RRC parameters) for CSI report configuration and CSI resource configuration are described.

The CSI report control information ("CSI-ReportConfig") includes resource information for channel measurement ("reresourcesForChanneMeasurement"). The CSI report control information may also include resource information for interference measurement (for example, NZP CSI-RS resource information for interference measurement ("nzp-CSI-RS-ReresourcesForInterference"), CSI-IM resource information for interference measurement ("csi-IM-ReresourcesForInterference"), and the like). These pieces of resource information correspond to IDs (Identifiers) of the CSI resource control information ("CSI-ResourceConfigId") .

Note that the IDs of the CSI resource control information (which may be also referred to as CSI resource configuration IDs) corresponding to respective pieces of the resource information may have values one or more of which are the same value, or each of which is a different value.

The CSI resource control information ("CSI-ResourceConfig") may include a CSI resource control information ID, a CSI-RS resource set list information ("csi-RS-ReresourcesetList"), a resource type ("ResourceType"), and the like. The CSI-RS resource set list may include at least one of information of NZP CSI-RS and SSB ("nzp-CSI-RS-SSB") for measurement and CSI-IM resource set list information ("csi-IM-ReresourceSetList").

The resource type represents a behavior of a time domain of this resource configuration, and can be configured with "aperiodic," "semi-persistent," or "periodic". For example, the CSI-RS corresponding to each resource type may be referred to as an A-CSI-RS (AP-CSI-RS), an SP-CSI-RS, or a P-CSI-RS.

Note that the resource for channel measurement may be used to compute the CQI, the PMI, the L1-RSRP, and the like, for example. The resource for interference measurement may be used to compute indices of the L1-SINR, the L1-SNR, the L1-RSRQ, and other interferences.

### (Inter-Cell Mobility)

In NR, a study is underway that one or more transmission/reception points (TRPs) (multi-TRP (MTRP)) perform DL transmission to the UE. A study is underway also that the UE performs UL transmission to one or more TRPs.

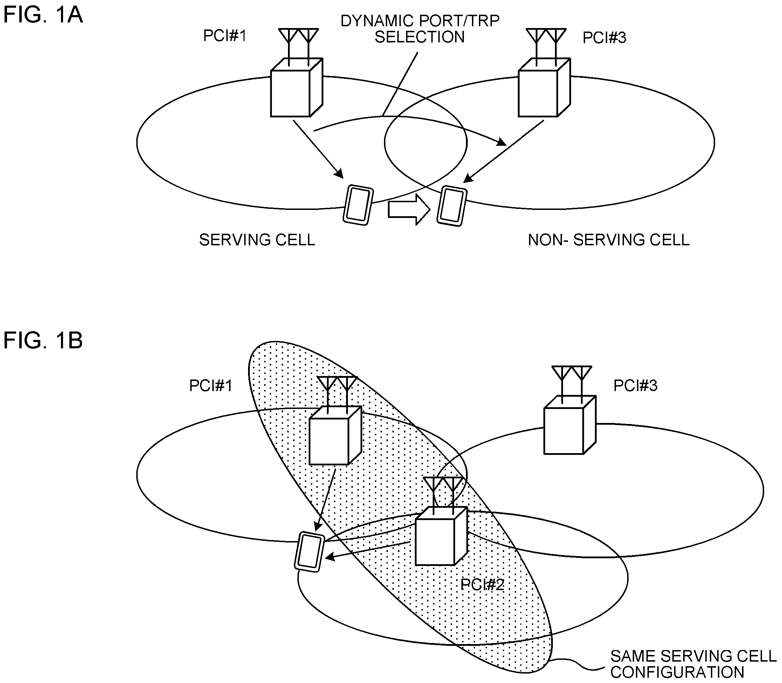

The UE may receive a channel/signal from a plurality of cells/TRPs in inter-cell mobility (for example, L1/L2 inter cell mobility) (see FIGS. 1A and 1B).

FIG. 1A shows an example of the inter-cell mobility including the non-serving cell (for example, Single-TRP inter-cell mobility). The UE may be configured with one TRP (or a single TRP) in each cell. Here is shown a case where the UE receives a channel/signal from a base station/TRP in cell #1 that is the serving cell, and a base station/TRP in cell #3 that is not the serving cell (but is the non-serving cell/Non-serving cell). For example, this case corresponds to a case where the UE switches from cell #1 to cell #3 (for example, fast cell switch).

In this case, port (for example, antenna port)/TRP selection may be dynamically performed. The port (for example, antenna port)/TRP selection or may be performed based on the TCI state indicated or updated by the DCI/MAC CE. Here, a case is shown in which different physical cell ID (Physical Cell Identifier (PCI)) configurations are supported for cell #1 and cell #3.

FIG. 1B shows an example of a multi-TRP scenario (for example, inter-cell mobility in a case of using multi-TRP (Multi-TRP inter-cell mobility)). The UE may be configured with a plurality of (for example, two) TRPs (or different CORESET pool indices) in each cell. Here is shown a case where the UE receives a channel/signal from TRP #1 TRP 2. Here, a case is shown in which TRP #1 corresponds to physical cell ID (PCI)#1, and TRP #2 corresponds to PCI #2.

The multi-TRP (TRP #1, TRP #2) may be connected by an ideal/non-ideal backhaul to communicate information, data, or the like. From the respective TRPs of the multi-TRP, same or different codewords (code words, CWs) and same or different layers may be transmitted. As shown in FIG. 1B, A non-coherent joint transmission (NCJT) may be used as one form of multi-TRP transmission. Here, a case is shown in which the NCJT is performed between the TPRs corresponding to different PCIs. Note that the same serving cell configuration may be applied to/configured for TRP #1 and TRP #2.

A plurality of PDSCHs (multi-PDSCH) subjected to the NCJT may be defined to partially or fully overlap in at least one of time and frequency domains. In other words, a first PDSCH from TRP #1 and a second PDSCH from TRP #2 may overlap each other in at least one of the time and frequency resources. The first PDSCH and the second PDSCH may be used for the same TB transmission or different TB transmissions.

These first and second PDSCHs may be expected to be not in a quasi-co-location (QCL) relation (or to be not quasi-co-located) with each other. A reception of the multi-PDSCH may be interpreted as simultaneous reception of PDSCH with not a QCL type (for example, QCL type D).

A plurality of PDSCHs (also referred to as multi-PDSCH (multiple PDSCH)) from the multi-TRP may be scheduled by using one piece of DCI (single DCI (S-DCI), single PDCCH) (single master mode). A single DCI may be transmitted from one TRP of the multi-TRP. A structure using a single DCI in the multi-TRP may be referred to as a single DCI based multi-TRP (mTRP/MTRP).

A plurality of PDSCHs from the multi-TRP may be scheduled respectively by using a plurality of pieces of DCI (multi-DCI (M-DCI), multi-PDCCH (multiple PDCCH)) (multi-master mode). The plurality of pieces of DCI may be respectively transmitted from the multi-TRP. A structure using a plurality of pieces of DCI in the multi-TRP may be referred to as multi-DCI based multi-TRP (mTRP/MTRP).

The UE may assume transmitting, to different TRPs, separate CSI reports for the respective TRPs. Such CSI feedback may be referred to as separate feedback, separate CSI feedback, and the like. In the present disclosure, "separate" may be interchangeably interpreted as "independent."

In Rel-17 NR and beyond, it is assumed that a beam indication to a TCI state associated with a different PCI is supported by the MAC CE/DCI. In Rel-18 NR and beyond, it is assumed that an indication of serving cell change to a cell having a different PCI is supported by the MAC CE/DCI.

The inter-cell mobility (for example, L1/L2 inter-cell mobility) described above allows the UE to transmit/receive a UL/DL channel/RS to/from a cell having a PCI different from a PCI of a serving cell. For example, in a case where an RSRP of a non-serving cell is larger than an RSRP of the serving cell, the UE may transmit/receive a UL/DL channel/RS to/from the non-serving cell without handover.

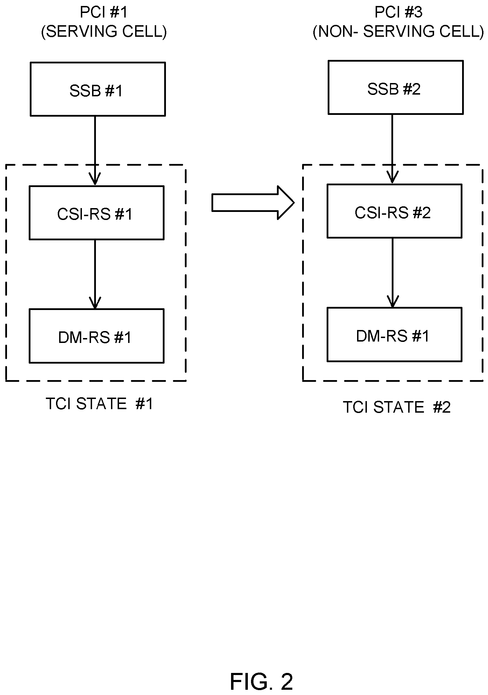

FIG. 2 is a diagram to show a TCI state corresponding to a CSI-RS associated with an SSB of a non-serving cell. PCIs #1 and #3 in FIG. 2 correspond to PCIs #1 and #3 in FIGS. 1A and 1B. In a case where inter-cell mobility shown in FIG. 1A is performed, the UE switches a TCI state used for DL reception from TCI state #1 to TCI state #2.

### <Beam Reporting and Rebuild Index>

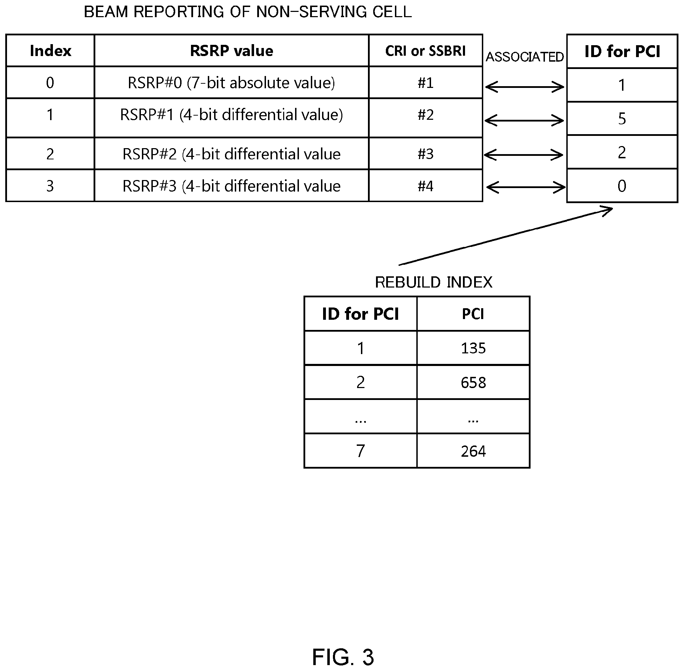

FIG. 3 is a diagram to show an example of association between beam reporting and rebuild indices. As shown in FIG. 3, beam reporting (CSI report) of a non-serving cell includes an RSRP value and a CRI or an SSBRI. The CRI or the SSBRI is associated with a rebuild index (ID for PCI).

The rebuild index is a newly build index based on a PCI, and is associated with at least a part of the PCI. The rebuild index may be configured for the UE by the RRC, and may be allocated with a numerical value up to 7 corresponding to an additional PCI (of the non-serving cell). The rebuild index (ID) of 0 may refer to the serving cell (the PCI of the serving cell). The rebuild index can be represented by the smaller number of bits compared to the PCI, suppressing an overhead of communication.

### <Multi-TRP Inter-Cell Scenario>

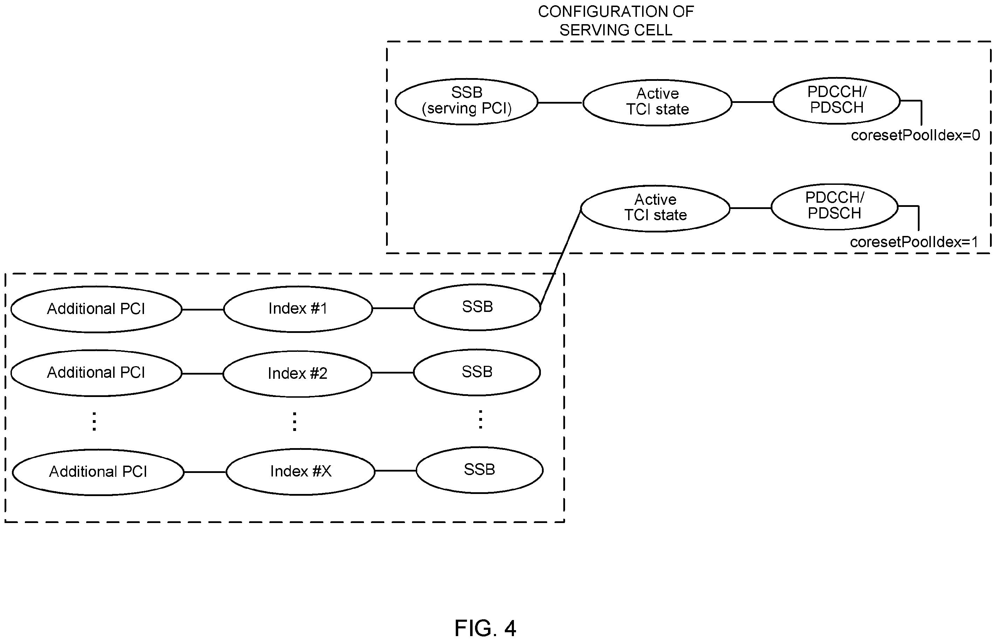

An inter-cell scenario in the multi-DCI based multi-TRP (inter-cell mobility) is described. In a case where the multi-TRP is applied, coresetPoolIndex is configured. As shown in FIG. 4, the additional PCI is associated with an activated TCI state corresponding to a PDSCH/PDCCH (an SSB as a QCL source RS). One PCI is associated with an activated TCI state corresponding to one coresetPoolIndex.

As shown in FIG. 4, the PCI of the serving cell is always associated with an active TCI state, and the additional PCI (the SSB corresponding to the additional PCI) is associated with only one active TCI state. The PDCCH/PDSCH corresponding to the serving cell may be rate matched around an SSB associated with the PCI of the serving cell. The PDCCH/PDSCH corresponding to the additional PCI may be rate matched around an SSB associated with the additional PCI. A type 0/0A/1/2 common search space (CSS) may not be monitored.

Note that the serving cell may be the same as the cell having the additional PCI in a center frequency, a subcarrier spacing (SCS), and a system frame number (SFN) offset. The number of additional PCIs configured by the RRC may be up to seven. The UE may report a UE capability indicating the maximum number of additional PCIs of X.

For X of the maximum number of additional PCIs configured as the UE capability, the following two cases are conceivable. Note that a case 1 and a case 2 may not be simultaneously enabled.
[Case 1] X represents the maximum number of additional PCIs when corresponding "SSB time domain positions and periodicity" are the same as the serving cell (relevant X is X1).
[Case 2] X represents the maximum number of additional PCIs when some or all of corresponding "SSB time domain positions and periodicity" are different from the serving cell (relevant X is X2) .

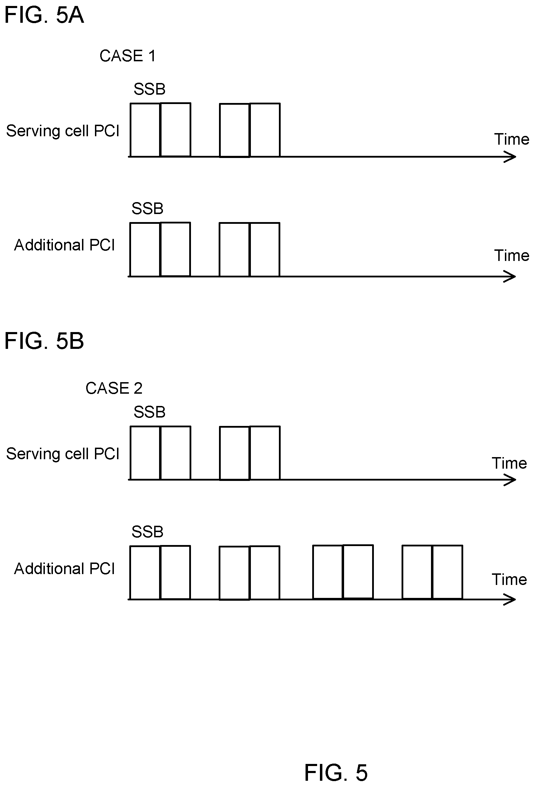

FIG. 5A is a diagram to show the maximum number of additional PCIs in the case 1. In FIG. 5A, X1 is 4. FIG. 5B is a diagram to show the maximum number of additional PCIs in the case 2. In FIG. 5B, X2 is 8.

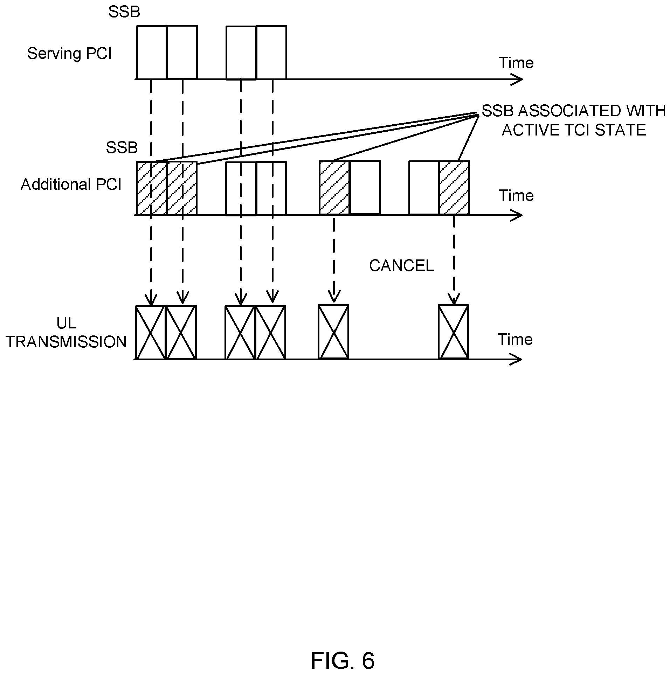

FIG. 6 is a diagram to show an example in which an SSB from a serving cell and an SSB from a cell having an additional PCI overlap a UL transmission. In a case where an SSB from the serving cell or an SSB from the cell having the additional PCI associated with the active TCI state overlaps a UL transmission in time, the UE may cancel the UL transmission.

In a QCL-related rule of which adoption is under study in Rel. 17, a DMRS of a PDCCH/PDSCH, a configured DL/joint TCI state is identified as "DLorJointTCIState" except for indicated "DLorJointTCIState". The indicated TCI state is applied to a plurality of UL/DL channels/RSs. The configured TCI state is applied to only to a channel/RS.

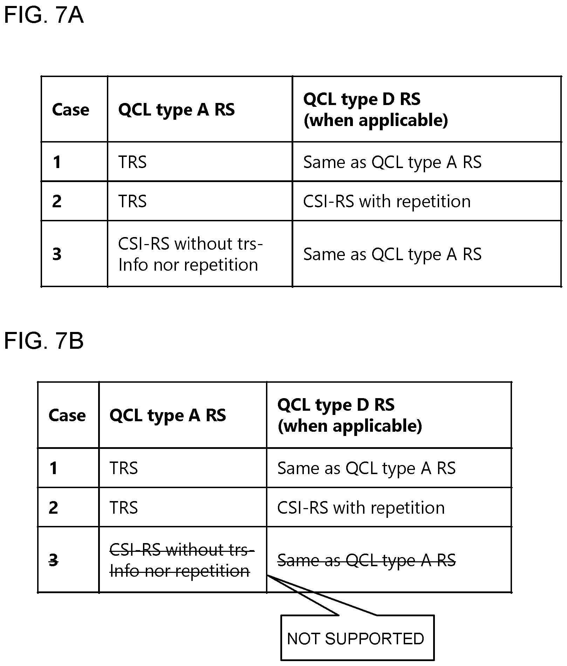

FIG. 7A is a diagram to show Rel-15 TCI state and Rel-17 configured DL/joint TCI state. FIG. 7B is a diagram to show an indicated DL/joint TCI state. FIG. 7B is different from FIG. 7A in that a relation on the third line is not supported. The term "configured" may mean being configured through higher layer (RRC) signaling. The term "indicated" may mean being indicated by the DCI.

### (Antenna Port Quasi Co-Location (QCL))

In a section of antenna port QCL in Rel. 17, Tracking Reference Signal (TRS) is defined as follow. Note that NZP-CSI-RS-ResourceSet is a higher layer parameter for non-zero power CSI-RS resource set.

For a periodic CSI-RS resource in NZP-CSI-RS-ResourceSet configured with a higher layer parameter trs-Info, the UE expects that the TCI state indicates any one of the following QCL types of (1) and (2).
(1) "type C" corresponding to an SS/PBCH block and, when applicable, "type D" corresponding to the same SS/PBCH block.
(2) "type C" of an SS/PBCH block and, when applicable, "type D" corresponding to a CSI-RS in NZP-CSI-RS-ResourceSet configured with higher layer parameter repetition.

In the antenna port QCL in Rel. 17, a study is underway to define a CSI-RS corresponding to a repetition transmission as follow.

For a CSI-RS resource in NZP-CSI-RS-ResourceSet configured with a higher layer parameter repetition, the UE expects that a TCI state indicates any one of the following QCL types of (1) to (3) .
(1) "type A" corresponding to a CSI-RS resource in NZP-CSI-RS-ResourceSet configured with a higher layer parameter trs-Info and, when applicable, "type D" corresponding to the same CSI-RS resource.
(2) "type A" corresponding to a CSI-RS resource in NZP-CSI-RS-ResourceSet configured with a higher layer parameter trs-Info, "type D" corresponding to a CSI-RS resource in NZP-CSI-RS-ResourceSet configured with a higher layer parameter repetition.
(3) "type C" corresponding to a SS/PBCH block and, when applicable, "type D" corresponding to the same SS/PBCH block. This reference RS may be additionally an SS/PBCH block having a PCI different from the PCI of the serving cell. The UE may assume that a center frequency, an SCS, and an SFN offset are the same for an SS/PBCH block from the serving cell and an SS/PBCH block with PCI different from that of the serving cell.

### (NZP CSI-RS)

In a section of NZP CSI-RS in Rel. 17, a study is underway to define as follow. In this section, a CSI-RS (including a TRS) is not inhibited from being further associated with an SSB having an additional PCI.

Parameters configured via the higher layer parameters NZP-CSI-RS-Resource, CSI-ResourceConfig, and NZP-CSI-RS-ResourceSet for each CSI-RS resource configuration in a case where the UE assumes non-zero transmission power for a CSI-RS resource include, for example, the following qcl-InfoPeriodicCSI-RS of (1).
(1) qcl-InfoPeriodicCSI-RS contains a reference to a TCI state indicating QCL source RS(s) and QCL type. In a case where the TCI state is configured with a reference to an RS configured with a QCL type of type D association, that RS may be an SS/PBCH block located in the same or different CC/DL BWP or a CSI-RS resource configured as periodic located in the same or different CC/DL BWP. The reference RS may be additionally an SS/PBCH block associated with a PCI different from the PCI of the serving cell.

### (Analysis)

As described above, in the future radio communication systems, communication is assumed to be controlled based on mobility between a plurality of cells including a cell (non-serving cell) having a physical cell ID (PCI) different from a PCI of a serving cell, or inter-cell mobility using a plurality of transmission/reception points. However, an indication of at least one of a TCI state and a QCL type in a case where a non-serving cell is applied has not been clarified. For example, for a TCI state of a TRS/CSI-RS, it is not clear whether a QCL type can be indicated corresponding to a reference signal (corresponding to a non-serving cell) having a physical cell ID (PCI) different from the PCI of the serving cell.

For example, except for the case 2 for Rel-15 TCI state and Rel-17 configured DL/joint TCI state shown in FIG. 7A, a TRS is requested as an RS of QCL type A. However, whether a non-serving cell SSB can be included as a QCL source RS of TRS has not been clarified. Currently, only the case 2 in FIG. 7B (that is, TRS and CSI-RSrepetition) is permitted. Which case is used may be dependent on implementation of a gNB. In general, the case 1 is considered to be widely used because of smaller overhead of CSI-RS thereof compared to the case 2.

Thus, the inventors of the present invention came up with the idea of a method in which an indication of at least one of a TCI state and a QCL type in the case where a non-serving cell is applied is appropriately made.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may refer to "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, a common beam, a unified TCI state, a beam applicable to DL and UL, a beam applied to a plurality of channels, and PL-RS may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS including TRS information (higher layer parameter trs-Info), an NZP CSI-RS resource in an NZP CSI-RS resource set including TRS information, and an NZP CSI-RS resource in an NZP CSI-RS resource set including TRS information may be interchangeably interpreted. In the present disclosure, a CSI-RS resource, a CSI-RS resource set, a CSI-RS resource group, and an information element (IE) may be interchangeably interpreted.

In the present disclosure, a non-serving cell, a candidate serving cell, a cell having a PCI different from a current serving cell, and another serving cell having a different PCI may be interchangeably expressed. A PCI different from a serving cell and an additional PCI may be interchangeably expressed.

In the present disclosure, a TRS, a tracking CSI-RS, a CSI-RS including TRS information (higher layer parameter trs-Info), and an NZP-CSI-RS resource in an NZP-CSI-RS resource set including TRS information may be interchangeably interpreted.

A TCI state, a TCI state or QCL assumption, a QCL assumption, QCL information, a QCL parameter, a spatial domain reception filter, a UE spatial domain reception filter, a spatial domain filter, a UE receive beam, a DL receive beam, DL precoding, a DL precoder, a DL-RS, and an be configured withRS of QCL type X in a TCI state or QCL assumption may be interchangeably interpreted. An RS of QCL type D, a DL-RS associated with QCL type D, a DL-RS having QCL type X, a DL-RS source, an SSB, and a CSI-RS may be interchangeably interpreted. Relevant X represents any one of, for example, A, B, C, and D.

In the present disclosure, the QCL source of N being M, N and M being in a QCL relationship, N and M being in a relationship of QCL type X, and a TCI state of N indicating QCL type X with M (QCL-type X with M) may be interchangeably interpreted. X may represent, for example, A, B, C, or D. N and M may be, for example, any one of a DM-RS, a CSI-RS, a TRS, and an SSB for a PDSCH/PDCCH. A DM-RS, a CSI-RS, a TRS, and an SSB for a PDSCH/PDCCH may be interpreted as a TCI state of the DM-RS, a TCI state of the CSI-RS, a TCI state of the TRS, and a TCI state of the SSB for the PDSCH/PDCCH, respectively. An SSB and an SS/PBCH block may be interchangeably interpreted.

B corresponding to A, B having A (B with A), and A having B (A with B) may be interchangeably interpreted. A type X and a QCL type X may be interchangeably interpreted. Relevant X represents any one of, for example, A, B, C, and D. An SS/PBCH block having a PCI different from a PCI of a serving cell and an SS/PBCH block of a non-serving cell may be interchangeably interpreted.

### (Radio Communication Method)

### <First Embodiment>

### <Embodiment 1.1>

A higher layer parameter trs-Info (higher layer parameter indicating information of a TRS) is received, for a periodic CSI-RS resource (a target RS) in NZP-CSI-RS-ResourceSet configured with relevant trs-Info, the UE may expect (assume) that a TCI state indicates the following QCL types of (1-1) to (1-3).

(1-1) "type C" corresponding to an SS/PBCH block and, when applicable, "type D" corresponding to the same SS/PBCH block.
(1-2) "type C" corresponding to an SS/PBCH block and, when applicable, "type D" corresponding to a CSI-RS in NZP-CSI-RS-ResourceSet configured with higher layer parameter repetition.
(1-3) "type C" corresponding to an SS/PBCH block (source RS) and, when applicable, "type D" corresponding to the same SS/PBCH block. This reference RS (SS/PBCH block) may be additionally an SS/PBCH block having a PCI different from the PCI of the serving cell.
The UE may assume that a center frequency, an SCS, and an SFN offset are the same for an SS/PBCH block from the serving cell and an SS/PBCH block with PCI different from that of the serving cell.

The QCL type of (1-3) is not limited to the QCL type indicated by the TCI state for the periodic CSI-RS resource, and may be a QCL type indicated by a TCI state for another channel/RS or the like.

The TCI state in the present embodiment may be a Rel-15/16 TCI state, or a unified TCI state studied in Rel. 17 (a TCI state used for both a UL channel and a DL channel. In a case where the unified TCI state studied in Rel. 17 is applied, the above (1-3) may (or may not) be included, and in a case where the Rel-15/16 TCI state is applied, the above (1-3) may not (or may) be not included.

In a case where a TCI state associated with a PCI different from the PCI of the serving cell is configured, the above (1-3) may be included, and in a case where the relevant TCI state is not configured, the above (1-3) may not be included.

The TCI state in the present embodiment may be a TCI state configured/indicated for/to a TRS, or a TCI state with a TRS being configured as a QCL source RS (for example, a TCI state of a DMRS for a PDCCH/PDSCH).

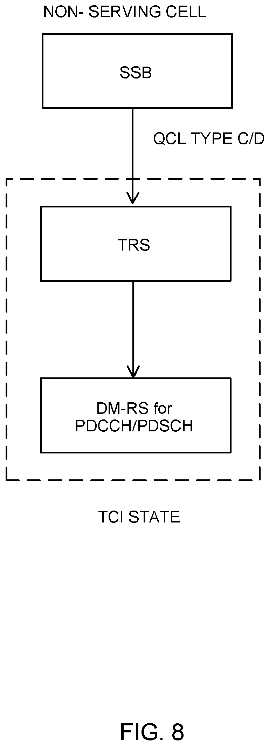

FIG. 8 is a diagram to show a QCL relation of TRSs in aspect 1.1. A QCL relation between a DM-RS for a PDSCH/PDCCH and a TRS may be, for example, the QCL type A or D. A QCL relation between a TRS and an SSB of a non-serving cell (a cell having a PCI different from the PCI of the serving cell) may be, for example, the QCL type C or D.

### <Embodiment 1.2>

For a CSI-RS resource (a target RS) in NZP-CSI-RS-ResourceSet configured, the UE expects that a TCI state indicates any one of the following QCL types of (2-1) to (2-5). Relevant NZP-CSI-RS-ResourceSet does not have a higher layer parameter trs-Info and a higher layer parameter repetition. That is, the UE does not receive the higher layer parameter trs-Info and the higher layer parameter repetition.

(2-1) "type A" corresponding to a CSI-RS resource in NZP-CSI-RS-ResourceSet configured with a higher layer parameter trs-Info and, when applicable, "type D" corresponding to the same CSI-RS resource.
(2-2) "type A" corresponding to a CSI-RS resource in NZP-CSI-RS-ResourceSet configured with a higher layer parameter trs-Info and, when applicable, "type D" corresponding to an SS/PBCH block.
(2-3) "type A" corresponding to a CSI-RS resource in NZP-CSI-RS-ResourceSet configured with a higher layer parameter trs-Info and, when applicable, "type D" corresponding to a CSI-RS resource in NZP-CSI-RS-ResourceSet configured with a higher layer parameter repetition.
(2-4) when "type D" is not applicable, "type B" corresponding to a CSI-RS resource in NZP-CSI-RS-ResourceSet configured with a higher layer parameter trs-Info.
(2-5) "type A" corresponding to a CSI-RS resource (another CSI-RS resource/source RS) in NZP-CSI-RS-ResourceSet configured with a higher layer parameter trs-Info and, when applicable, "type D" corresponding to an SS/PBCH block (a source RS), where this reference RS (the CSI-RS resource, and the SS/PBCH block) may be additionally an SS/PBCH block having a PCI different from the PCI of the serving cell. The UE may assume that a center frequency, an SCS, and an SFN offset are the same for an SS/PBCH block from the serving cell and an SS/PBCH block with PCI different from that of the serving cell.

The QCL type of (2-5) is not limited to the QCL type indicated by the TCI state for the periodic CSI-RS resource, and may be a QCL type indicated by a TCI state for another channel/RS or the like.

The TCI state in the present embodiment may be a Rel-15/16 TCI state, or a unified TCI state studied in Rel. 17. In a case where the unified TCI state studied in Rel. 17 is applied, the above (2-5) may (or may not) be included, and in a case where the Rel-15/16 TCI state is applied, the above (2-5) may not (or may) be not included.

In a case where a TCI state associated with a PCI different from the PCI of the serving cell is configured, the above (2-5) may be included, and in a case where the relevant TCI state is not configured, the above (2-5) may not be included.

The TCI state in the present embodiment may be a TCI state configured/indicated for/to a TRS, or a TCI state with a TRS being configured as a QCL source RS (for example, a TCI state of a DMRS for a PDCCH/PDSCH).

In the multi-TRP inter-cell, for a DMRS for a PDCCH/PDSCH, a QCL source RS and a QCL type in any one of the following options 1 to 3 may be supported. The present embodiment corresponds to the option 3.

### <<Option 1»

A TRS is configured for a QCL type A source RS, and a CSI-RS for beam management is configured for a QCL type D source RS.

### <<Option 2»

A TRS is configured for QCL type A and QCL type D source RSs.

### <<Option 3»

A CSI-RS for a CSI is configured for QCL type A and QCL type D source RSs.

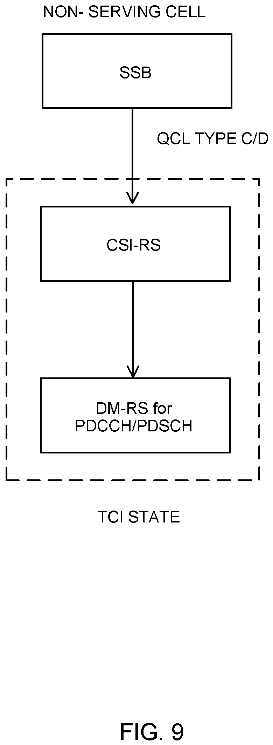

FIG. 9 is a diagram to show a QCL relation of CSI-RSs in aspect 1.2. A QCL relation between a DM-RS for a PDSCH/PDCCH and a CSI-RS may be, for example, the QCL type A or D. A QCL relation between a CSI-RS and an SSB of a non-serving cell (a cell having a PCI different from the PCI of the serving cell) may be, for example, the QCL type A or D.

### <Supplement>

At least one of the embodiments described above may be applied to only the UE that reports a specific UE capability or supports the specific UE capability.

The specific UE capability may indicate at least one of the following:
- supporting specific processing/operation/control/information for at least one of the above embodiments,
- supporting a Rel-17 unified TCI state,
- supporting L1/L2 inter-cell mobility,
- supporting multi-TRP inter-cell mobility, and
- supporting a use of a SSB of an additional PCI as a QCL source.

The specific UE capability described above may be a capability applied across all frequencies (in common regardless of a frequency), a capability per frequency (for example, cell, band, BWP), a frequency range (for example, a capability per Frequency Range 1 (FR1), FR2, FR3, FR4, FR5, FR2-1, FR2-2), or a capability per subcarrier spacing (SCS).

The specific UE capability described above may be a capability applied across all duplex schemes (in common regardless of a duplex scheme), or a capability per duplex scheme (for example, time division duplex (TDD), frequency division duplex (FDD)).

At least one of the above-described embodiments may be applied in a case where the UE is configured with specific information related to the above-described embodiment through higher layer signaling. For example, the specific information may correspond to the UE capability described above.

In a case where the UE does not support at least one of the specific UE capabilities described above, or is not configured with the specific information described above, the UE may apply, for example, a Rel-15/16 operation.

### (Supplementary Note)

Regarding one embodiment of the present disclosure, the following supplementary notes of the present disclosure will be given.

### [Supplementary Note 1] (Corresponding to (1-3) of Embodiment 1.1)

A terminal including:
a receiving section that receives a higher layer parameter indicating information of a tracking channel state information reference signal (CSI-RS) (TRS); and
a control section that expects that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell.

### [Supplementary Note 2] (Corresponding to (1-3) of Embodiment 1.1)

The terminal according to supplementary note 1, wherein
the QCL type is a QCL type C and a QCL type D.

### [Supplementary Note 3] (Corresponding to (2-5) of Embodiment 1.2)

The terminal according to supplementary note 1 or 2, wherein
in a case where the receiving section does not receive the information, the control section expects that a TCI state for a CSI-RS resource is a QCL type A corresponding to another CSI-RS resource configured with the information, and the CSI-RS resource has a PCI different from the PCI of the serving cell.

### [Supplementary Note 4] (Corresponding to (2-5) of Embodiment 1.2)

The terminal according to any one of supplementary notes 1 to 3, wherein
in a case where the receiving section does not receive the information, the control section expects that a TCI state for a CSI-RS resource is a QCL type D corresponding to an SS/PSCH block, and the SS/PSCH block has a PCI different from the PCI of the serving cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

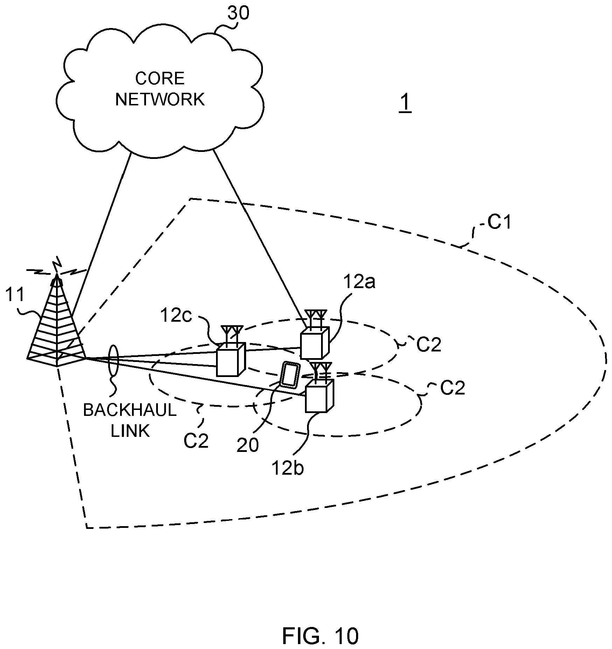

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

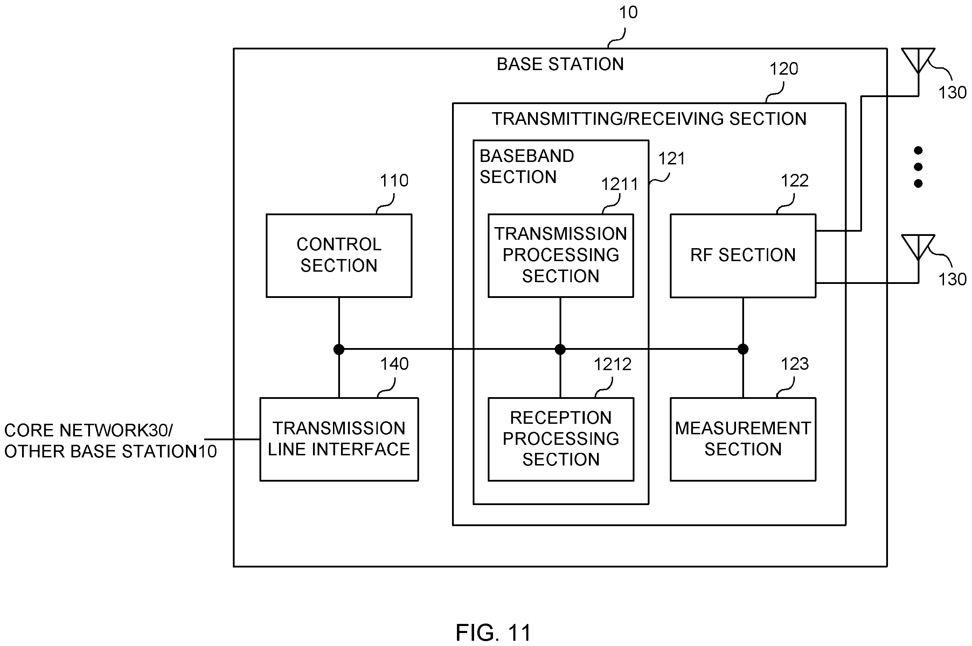

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a higher layer parameter indicating information of tracking channel state information reference signal (CSI-RS) (TRS).

The control section 110 may indicate that a transmission configuration indication (TCI) state for a CSI-RS resource configured with the information is a QCL type corresponding to a synchronization signal/a physical broadcast channel (SS/PSCH) block having a physical cell ID (PCI) different from a PCI of a serving cell.

### (User Terminal)

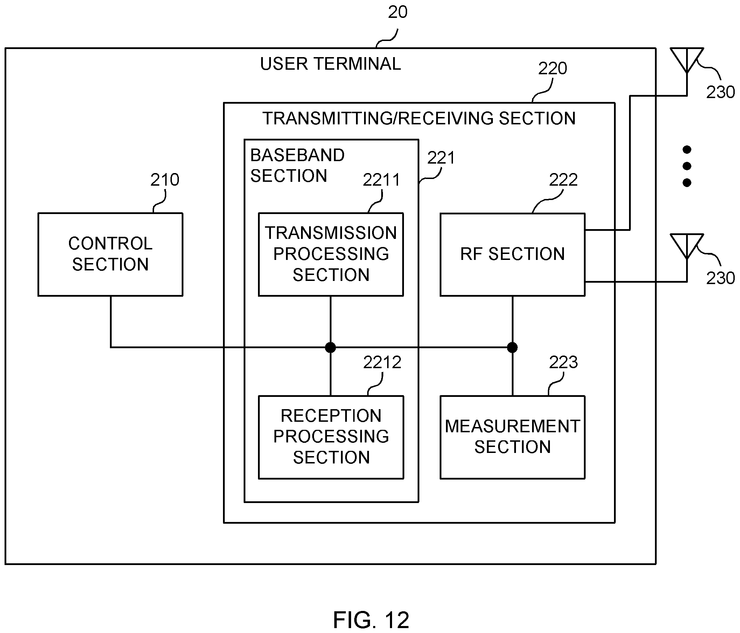

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a higher layer parameter indicating information of tracking channel state information reference signal (CSI-RS) (TRS).

The control section 210 may expect that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell. The QCL type may be a QCL type C and a QCL type D.

In a case where the transmitting/receiving section 220 does not receive the information, the control section 210 may expect that a TCI state for a CSI-RS resource is a QCL type A corresponding to another CSI-RS resource configured with the information, and the CSI-RS resource may have a PCI different from the PCI of the serving cell.

In a case where the transmitting/receiving section 220 does not receive the information, the control section 210 may expect that a TCI state for a CSI-RS resource is a QCL type D corresponding to an SS/PSCH block, and the SS/PSCH block may have a PCI different from the PCI of the serving cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

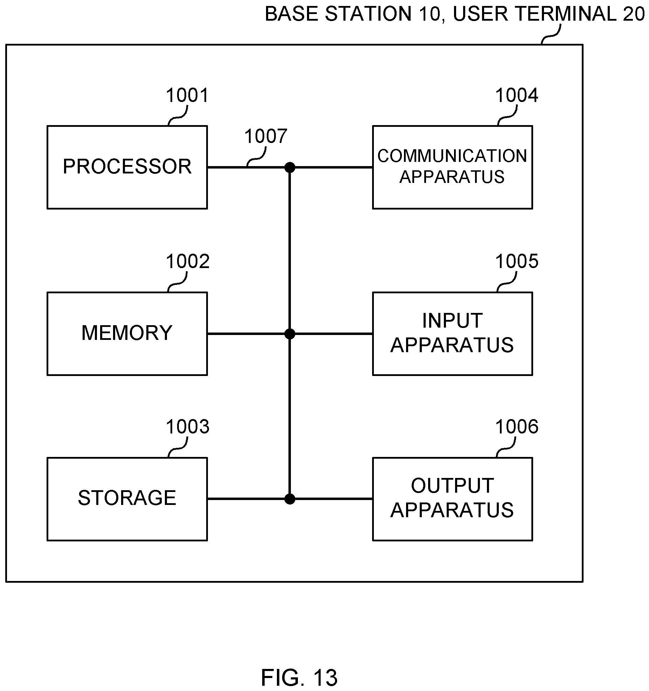

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal may be interchangeably interpreted as the base station indicating a control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

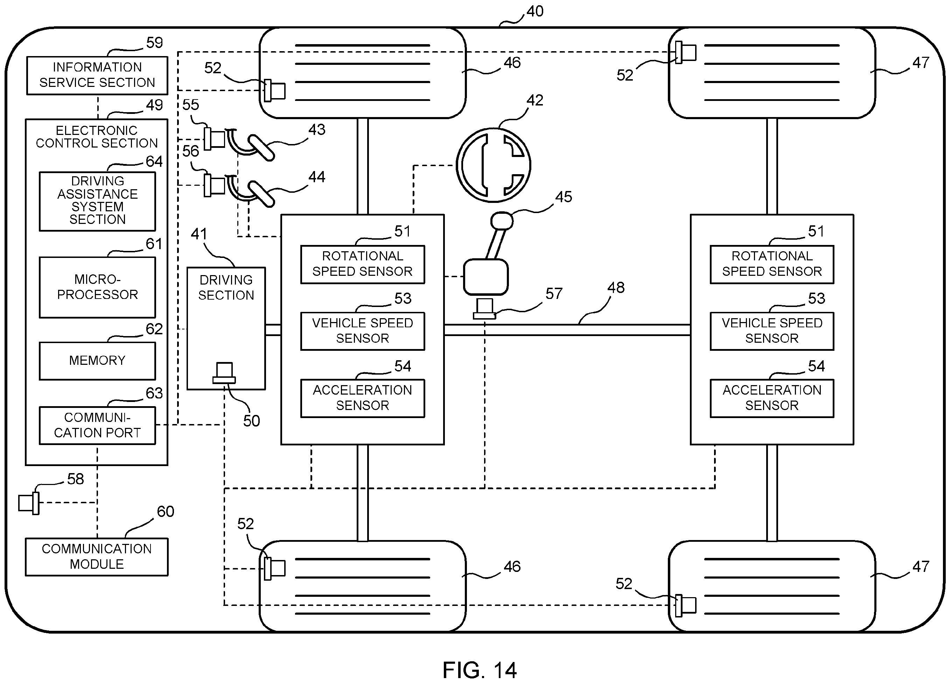

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a higher layer parameter indicating information of a tracking channel state information reference signal (CSI-RS) (TRS); and
a control section that expects that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell.

2. The terminal according to claim 1, wherein
the QCL type is a QCL type C and a QCL type D.

3. The terminal according to claim 1, wherein
in a case where the receiving section does not receive the information, the control section expects that a TCI state for a CSI-RS resource is a QCL type A corresponding to another CSI-RS resource configured with the information, and the CSI-RS resource has a PCI different from the PCI of the serving cell.

4. The terminal according to claim 1, wherein
in a case where the receiving section does not receive the information, the control section expects that a TCI state for a CSI-RS resource is a QCL type D corresponding to an SS/PSCH block, and the SS/PSCH block has a PCI different from the PCI of the serving cell.

5. A radio communication method for a terminal, the radio communication method comprising:
receiving a higher layer parameter indicating information of a tracking channel state information reference signal (CSI-RS) (TRS); and
expecting that a transmission configuration indication (TCI) state for a CSI-RS resource configured with the information indicates a QCL type corresponding to a synchronization signal/a physical broadcast channel (SS/PSCH) block having a physical cell ID (PCI) different from a PCI of a serving cell.

6. A base station comprising:
a transmitting section that transmits a higher layer parameter indicating information of a tracking channel state information reference signal (CSI-RS) (TRS); and
a control section that indicates that a transmission configuration indication (TCI) state for a CSI-RS resource configured with the information is a QCL type corresponding to a synchronization signal/a physical broadcast channel (SS/PSCH) block having a physical cell ID (PCI) different from a PCI of a serving cell.
